# FASCICULE DE BREVET EUROPEEN

(11) **EP 3 114 009 B1**
(45) Date de publication et mention de la délivrance du brevet: **07.11.2018**
(21) Numéro de dépôt: 15713211.9
(22) Date de dépôt: 27.02.2015
(51) Int. Cl.: B62D 5/10, B62D 5/08, B62D 5/12

(54) **CAPOT DE TYPE AUTOCLAVE A DOUBLURE INJECTÉE VENANT EN APPUI CONTRE UNE COURONNE DE STRUCTURE EN POSITION DE FERMETURE DU CAPOT**
HAUBE VOM UMWICKLUNGSTYP MIT EINER SPRITZGEGOSSENEN AUSKLEIDUNG, DIE GEGEN EINEN STRUKTURRING IN DER GESCHLOSSENEN POSITION DER HAUBE ANLIEGT
HOOD OF THE WRAPAROUND TYPE HAVING AN INJECTION-MOULDED LINING THAT BEARS AGAINST A STRUCTURAL RING IN THE CLOSED POSITION OF THE HOOD

(30) Priorité: 07.03.2014 FR 1451876
(43) Date de publication de la demande: 11.01.2017
(73) Titulaire: Renault S.A.S., 92100 Boulogne-Billancourt (FR)
(72) Inventeur: CARRIE, Julien, F-78000 Versailles (FR); GLAUMOT, Olivier, F-91470 Forges Les Bains (FR)
(86) Numéro de dépôt international: PCT/FR2015/050494
(87) Numéro de publication internationale: WO 2015/136184

(56) Documents cités:
- EP-A1- 1 953 067
- EP-A1- 2 033 880
- EP-A1- 2 692 615
- DE-A1-102012 012 107
- FR-A1- 2 838 703

## Description

### Domaine technique de l'invention

L'invention concerne un capot avant de véhicule automobile destiné à occuper une position de fermeture dans laquelle il obture un compartiment moteur du véhicule, chaque bord longitudinal du capot avant étant muni d'un rebord s'étendant vers le bas lorsque le capot avant est en position de fermeture, le capot avant comprenant une peau extérieure et une doublure intérieure fixée à la peau extérieure.

L'invention a également pour objet un agencement pour véhicule automobile comprenant un tel capot avant et un véhicule automobile comprenant un tel agencement.

### État de la technique

Dans le milieu de l'industrie automobile, il est de plus en plus recherché des solutions permettant aux véhicules automobiles d'être dimensionnés vis-à-vis d'un choc piéton de sorte à minimiser les dommages corporels lors d'un impact accidentel avec un piéton. En effet, les véhicules sont non seulement conçus pour assurer un niveau de protection maximal pour les occupants mais également pour assurer un bon niveau de sécurité pour les piétons, en tendant à diminuer les effets engendrés sur ceux-ci suite à une collision accidentelle, comme cela est notamment décrit dans le document EP-A-2 692 615.

Parmi ces solutions, on trouve les capots actifs ou des coussins gonflables de pare-brise. Mais ces systèmes sont onéreux, encombrants, et difficiles à mettre au point.

De plus, compte tenu des niveaux d'énergie de choc à absorber, une solution de type passive, qui est la solution la plus répandue, nécessite des volumes de corps creux conséquents entre le capot avant et le compartiment moteur. Elle pose aussi de réelles contraintes architecturales dans la zone de jonction entre l'aile avant et le capot avant, l'articulation et la serrure. Cela signifie donc que la nécessité de répondre aux exigences liées au choc piéton est contraignante à l'encontre de la liberté de designs, notamment afin de réduire les émissions de dioxyde de carbone, et de la liberté dans le choix des matériaux, notamment afin de réduire le poids des capots.

Dans des découpages architecturaux actuels où le capot ne comprend pas de rebords dirigés vers le bas en position de fermeture, le capot avant est en lévitation entre ses articulations à la caisse et le point correspondant à la serrure. Cela ne permet donc pas d'absorber efficacement l'énergie lors du choc de la tête et les pontets d'aile constituent des points durs qui pénalisent aussi le choc de la tête.

Il en est de même pour les capots avant comprenant de tels rebords : ils sont actuellement obtenus par des technologies de tôles embouties et ils restent en lévitation entre la zone d'articulation et la zone de serrure, ce qui ne permet pas d'absorber efficacement l'énergie lors du choc de la tête sur le capot.

L'invention vise à apporter une nouvelle solution technique de type passive pour répondre aux nouveaux protocoles piéton et permettre aussi l'allègement de nos véhicules. Cette solution nécessite un redécoupage de la façade avant et des procédés de fabrication pour la doublure de capot jusque-là non utilisés.

### Objet de l'invention

Le but de la présente invention est de proposer une solution qui remédie aux inconvénients listés ci-dessus.

Notamment, un objet de l'invention est de fournir un capot avant et un agencement pour véhicules automobiles qui offrent une liberté de conception architecturales et esthétiques, une liberté de choix de matériaux, l'opportunité de présenter un faible poids tout en répondant efficacement à la problématique de la gestion du choc piéton.

Cet objet peut être atteint par l'intermédiaire d'un capot avant de véhicule automobile destiné à occuper une position de fermeture dans laquelle il obture un compartiment moteur du véhicule, chaque bord longitudinal du capot avant étant muni d'un rebord s'étendant vers le bas lorsque le capot avant est en position de fermeture, le capot avant comprenant une peau extérieure et une doublure intérieure fixée à la peau extérieure, la doublure intérieure étant obtenue par injection de matière dans un moule et conformée de sorte que la périphérie de la doublure intérieure délimite une face d'appui de forme annulaire destinée à venir en appui, lorsque le capot avant occupe sa position de fermeture, contre une face de structure du véhicule automobile en forme de couronne formée dans un élément de structure du véhicule distinct du capot avant et délimitant une ouverture d'accès au compartiment moteur lorsque le capot avant occupe une position d'ouverture.

Selon un mode de réalisation, la face d'appui annulaire présente un contour continu fermé.

De préférence, le matériau dans lequel la doublure intérieure est formée est différent du matériau dans lequel la peau extérieure est formée. Le matériau de la peau extérieure peut être un thermoplastique, notamment du polypropylène, et/ou le matériau injecté de la doublure intérieure peut être un métal, notamment du magnésium ou de l'aluminium.

Selon un mode de réalisation, la face d'appui comprend deux portions longitudinales agencées de manière continue sur les deux bords longitudinaux de la doublure intérieure et destinées à venir chacune en appui contre un renfort de choc avant correspondant lorsque le capot avant occupe sa position de fermeture, les deux renforts de choc avant appartenant audit élément de structure.

La face d'appui peut comprendre une portion transversale avant agencée de manière continue sur un bord latéral avant de la doublure intérieure et destinée à venir en appui contre une ossature avant du véhicule lorsque le capot avant occupe sa position de fermeture, ladite ossature avant appartenant audit élément de structure.

De préférence, la face d'appui comprend une portion transversale arrière agencée de manière continue sur un bord latéral arrière de la doublure intérieure et destinée à venir en appui contre une boite à eau du véhicule lorsque le capot avant occupe sa position de fermeture, ladite boite à eau appartenant audit élément de structure.

La doublure intérieure peut délimiter tout ou partie des éléments suivants :
- des éléments de renfort obtenus par augmentation locale de l'épaisseur de la doublure intérieure, pour renforcer la doublure intérieure au niveau d'une gâche, d'articulations et de butées du capot avant,
- des éléments d'articulation du capot avant sur l'élément de structure,
- tout ou partie d'une boîte à eau et d'un élément de fermeture de la boite à eau,
- tout ou partie d'une boîte à air et d'un élément de fermeture de la boite à air,
- un réservoir additionnel pour contenir un liquide, notamment de l'urée,
- un écran de passage de roue.

Un agencement pour véhicule automobile pourra comprendre un tel capot avant pouvant occuper une position de fermeture dans laquelle il obture un compartiment moteur du véhicule automobile et un élément de structure du véhicule automobile distinct du capot avant, ayant une face de structure en forme de couronne délimitant une ouverture d'accès au compartiment moteur lorsque le capot avant occupe une position d'ouverture, l'agencement étant configuré de sorte que la face d'appui de forme annulaire délimitée par la périphérie de la doublure intérieure est en appui contre ladite face de structure lorsque le capot avant occupe sa position de fermeture.

La face de structure en forme de couronne peut présenter un contour continu fermé.

De préférence, ladite face de structure comprend tout ou partie des parties suivantes :
- deux parties longitudinales agencées de manière continue sur la longueur de deux renforts de choc avant sensiblement longitudinaux appartenant audit élément de structure, configurées de sorte que deux portions longitudinales de la face d'appui agencées de manière continue sur les deux bords longitudinaux de la doublure intérieure viennent chacune en appui contre la partie longitudinale délimitée par un renfort de choc avant correspondant, lorsque le capot avant occupe sa position de fermeture,
- une partie transversale avant agencée de manière continue sur la longueur d'une ossature avant sensiblement transversale appartenant audit élément de structure, configurée de sorte qu'une portion transversale avant de la face d'appui agencée de manière continue sur un bord latéral avant de la doublure intérieure vienne en appui contre la partie transversale avant délimitée par l'ossature avant, lorsque le capot avant occupe sa position de fermeture,
- une partie transversale arrière agencée de manière continue sur la longueur d'une boite à eau sensiblement transversale appartenant audit élément de structure, configurée de sorte qu'une portion transversale arrière de la face d'appui agencée de manière continue sur un bord latéral arrière de la doublure intérieure vienne en appui contre la partie transversale arrière délimitée par la boite à eau, lorsque le capot avant occupe sa position de fermeture,
- deux bras de liaison, chacun raccordant l'ossature avant à un renfort de choc avant correspondant.

Un véhicule automobile pourra comprendre un tel agencement pour véhicule automobile.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- les figures 1 et 2 sont deux vues en perspective représentant la garniture intérieure d'un exemple de capot avant selon l'invention et d'une partie de l'élément de renfort de l'agencement selon l'invention, respectivement dans une position de fermeture du capot avant et dans une configuration où le capot avant est retiré,
- la figure 3 est une vue de dessus des éléments des figures 1 et 2,
- et la figure 4 est une vue en coupe transversale-verticale de l'agencement des figures précédentes, sensiblement à mi-longueur du capot avant.

### Description de modes préférentiels de l'invention

La description qui va suivre est faite en référence à un repère orthonormé (X, Y, Z) associé classiquement à un véhicule automobile, dans lequel X est la direction longitudinale horizontale avant-arrière du véhicule, Y est la direction transversale droite-gauche qui est horizontale et perpendiculaire à X, et Z est la direction verticale conjointement perpendiculaire aux directions X et Y.

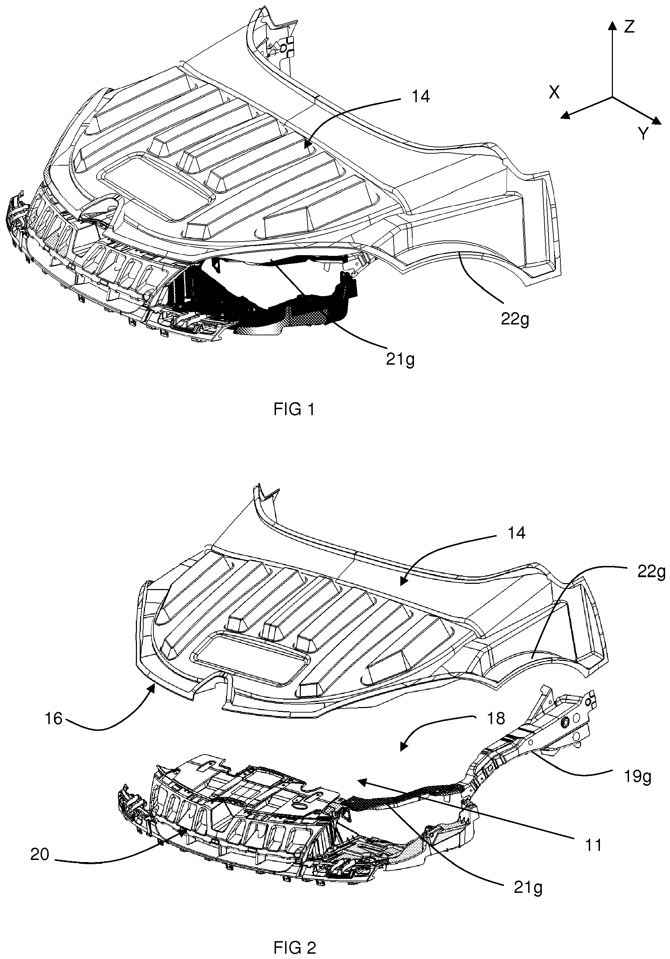

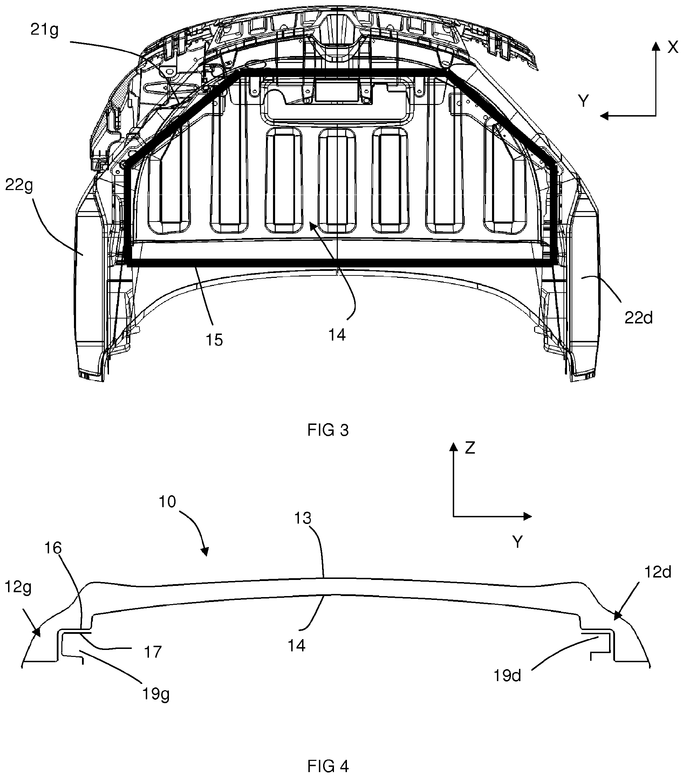

L'invention qui va être décrite en référence aux figures 1 à 4 concerne un capot avant 10 de véhicule automobile destiné à occuper une position de fermeture (figure 1) dans laquelle il obture un compartiment moteur 11 du véhicule. Chaque bord longitudinal du capot avant 10 orienté sensiblement selon la direction X est muni d'un rebord s'étendant vers le bas selon Z lorsque le capot avant 10 est en position de fermeture. Ainsi, le bord longitudinal droit du capot avant 10 comprend un rebord droit 12d (figure 4) et le bord longitudinal gauche du capot avant 10 comprend un rebord gauche 12g (figure 4), le rebord droit 12d et le rebord gauche 12g s'étendant chacun globalement vers le bas selon Z lorsque le capot avant 10 est dans sa position de fermeture. Le capot avant 10 comprend une peau extérieure 13 et une doublure intérieure 14 fixée à la peau extérieure 13, notamment sous la peau extérieure 13 en position de fermeture du capot avant 10.

Un tel capot avant 10 est aussi connu sous la dénomination capot « autoclave » et intègre, via les deux rebords 12d, 12g dirigés vers le bas selon Z, tout ou partie des deux ailes avant du véhicule automobile. Autrement dit, il convient de comprendre ici que les rebords 12d, 12g qui sont formés sur les deux bords longitudinaux du capot avant 10 sont conformés de sorte que le capot avant 10 intègre tout ou partie des ailes avant du véhicule automobile lorsque le capot avant 10 occupe sa position de fermeture.

La doublure intérieure 14 est une peau constituant un élément de rigidification du capot avant 10 agencé du côté intérieur du capot avant. Plus précisément, il peut s'agir d'un élément assurant cette fonction de rigidification en délimitant un corps creux en combinaison avec la peau extérieure 13 à laquelle la doublure intérieure 14 est fixée, notamment à sa périphérie du côté de sa face supérieure.

Selon une caractéristique essentielle, la doublure intérieure 14 est obtenue par injection de matière dans un moule et est conformée de sorte que la périphérie de la doublure intérieure 14 délimite une face d'appui 16 de forme annulaire destinée à venir en appui, lorsque le capot avant 10 occupe sa position de fermeture, contre une face de structure 17 (figure 4) du véhicule automobile en forme de couronne (cette couronne est symbolisée sur la figure 3 et est repérée 15), formée dans un élément de structure du véhicule distinct du capot avant 10 et délimitant une ouverture d'accès 18 au compartiment moteur 11 lorsque le capot avant 10 occupe une position d'ouverture. De préférence, toute la surface de la face d'appui 16 de la doublure intérieure 14 est en appui contre la face de structure 17 de l'élément de structure du véhicule lorsque le capot avant 10 est dans sa position de fermeture. La face d'appui 16 est disposée sur la face inférieure de la doublure intérieure 14, c'est-à-dire sur la face opposée à celle sur laquelle la peau extérieure 13 est fixée.

L'invention concerne aussi un agencement pour véhicule automobile, comprenant d'une part un tel capot avant 10 pouvant occuper la position de fermeture dans laquelle il obture le compartiment moteur 11 et d'autre part l'élément de structure du véhicule automobile distinct du capot avant 10, ayant la face de structure 17 en forme de couronne délimitant l'ouverture d'accès 18 au compartiment moteur 11 lorsque le capot avant 10 occupe une position d'ouverture, l'agencement étant configuré de sorte que la face d'appui 16 de forme annulaire délimitée par la périphérie de la doublure intérieure 14 obtenue par injection d'une matière dans un moule est, de préférence sur toute sa surface, en appui contre cette face de structure 17 lorsque le capot avant 10 occupe sa position de fermeture. Elle concerne aussi un véhicule automobile comprenant cet agencement.

La position de fermeture du capot avant 10 correspond à la position occupée par le capot avant 10 lorsqu'il obture cette ouverture d'accès 18, qui supprime la possibilité d'accès au compartiment moteur 11 au niveau de cette ouverture d'accès 18. L'ouverture d'accès 18 permet d'accéder à l'intérieur du compartiment moteur 11 lorsque le capot avant 10 n'occupe pas sa position de fermeture, occupant alors cette position dite d'ouverture. Le passage de l'une à l'autre de ces positions du capot avant peut par exemple être obtenu par l'intermédiaire d'un système de montage mobile du capot avant 10 sur l'élément de structure précédemment évoqué, notamment par articulation, par exemple au niveau d'un bord transversal (orienté selon la direction Y) arrière du capot avant 10, c'est-à-dire à proximité du bas du pare-brise au niveau de deux renforts de choc avant 19d, 19g, respectivement droit et gauche, sensiblement orientés globalement selon la direction longitudinale X (figures 2 et 4).

Un renfort de choc avant 19d, 19g est une pièce de renfort sensiblement parallèle au longeron avant de la structure du véhicule et qui fait office de renfort en cas de choc avant appliqué au véhicule.

Par « forme annulaire », il est de préférence entendu qu'il s'agit d'une face d'appui 16 en forme de couronne ayant un contour fermé et continu, évitant des discontinuités le long de la longueur de la face d'appui 16 sur la périphérie de la doublure intérieure 14.

La face de structure 17 en forme de couronne présente de préférence un contour continu fermé. Cette disposition permet d'éviter des discontinuités le long de la longueur de la face de structure 17 sur la périphérie de l'élément de structure.

Par « structure », il est de préférence compris ici que l'élément de structure et la face de structure sont configurés d'une manière leur permettant de ne pas ou très peu se déformer lors de chocs piéton sur le capot avant 10, le seul élément susceptible de se déformer pour encaisser ces chocs étant le capot avant 10 en appui par sa face d'appui 16 contre la face de structure 17.

Dans la zone des renforts de choc avant 19d, 19g, la doublure intérieure 14 du capot avant 10 vient donc appuyer sur la face de structure 17 pour gérer le choc piéton avec la déflection de la peau extérieure 13. Contrairement aux solutions de l'art antérieur évoquées précédemment, l'obtention par injection de la doublure intérieure 14 permet de s'affranchir de toutes les contraintes de capacité d'emboutissage pour de telles profondeurs de capot avant lorsqu'il s'agit d'un capot de type autoclave, et permet également de venir appuyer sur des zones techniques du compartiment moteur grâce à une plus grande liberté de forme offerte par la technologie d'injection.

Un autre avantage de cette solution est de permettre d'obtenir un capot avant 10 de faible poids en mixant les matériaux dans lesquels la peau extérieure 13 et la doublure intérieure 14 sont formées, formant un capot avant 10 hybride, afin de ne pas se limiter à des matériaux métalliques. Ainsi, le matériau dans lequel est formée la doublure intérieure 14 est de préférence différent du matériau dans lequel est formée la peau extérieure 13, cette caractéristique étant toutefois non limitative. Le matériau de la peau extérieure 13 est par exemple un thermoplastique, notamment du polypropylène ou un thermodur. Alternativement ou en combinaison, le matériau injecté de la doublure intérieure 14 est par exemple un métal, notamment du magnésium ou de l'aluminium, ou un thermodur ou un thermoplastique.

Selon un mode de réalisation, la face d'appui 16 comprend tout ou partie des portions suivantes :
- deux portions longitudinales sensiblement orientées selon la direction longitudinale X, agencées de manière continue sur les deux bords longitudinaux de la doublure intérieure 14 et destinées à venir chacune en appui contre un renfort de choc avant 19d, 19g correspondant lorsque le capot avant 10 occupe sa position de fermeture, les deux renforts de choc avant 19d, 19g appartenant à l'élément de structure,
- une portion transversale avant sensiblement orientée selon la direction latérale Y, agencée de manière continue sur un bord latéral avant de la doublure intérieure 14 et destinée à venir en appui contre une ossature avant 20 du véhicule lorsque le capot avant 10 occupe sa position de fermeture, cette ossature avant 20 appartenant à l'élément de structure,
- une portion transversale arrière sensiblement orientée selon la direction latérale Y, agencée de manière continue sur un bord latéral arrière de la doublure intérieure 14 et destinée à venir en appui contre une boite à eau (non représentée) du véhicule lorsque le capot avant 10 occupe sa position de fermeture, cette boite à eau appartenant à l'élément de structure.

La boite à eau est une structure disposée dans la partie inférieure du pare-brise avant et destinée essentiellement à recueillir les eaux de ruissellement s'écoulant du pare-brise et à séparer l'eau de l'air notamment à des fins de ventilation de l'habitacle.

La boîte à eau adopte par exemple une forme générale de gouttière dont l'ouverture est tournée vers le haut et est fermée par un élément de fermeture tel qu'une grille d'auvent. Elle comporte par exemple un rebord avant ayant une arête supérieure tournée vers le haut (feuillure), sur laquelle est monté un joint d'étanchéité. Lors de la fermeture du capot avant 10, la doublure intérieure 14 vient coopérer en appui sur ce joint pour séparer de façon relativement étanche le compartiment moteur 11 de l'espace intérieur de la boîte à eau. Plus précisément, c'est la portion transversale arrière de la face d'appui 16 délimitée par la doublure intérieure 14 qui vient en appui contre le joint d'étanchéité de la boite à eau.

L'ossature avant 20 du véhicule est notamment configurée de sorte à permettre la fixation du radiateur de refroidissement, d'entrées d'air, du bouclier, ou tout autre équipement classiquement monté en face avant d'un véhicule automobile.

Le bord transversal arrière de la doublure intérieure 14 est le bord orienté selon la direction latérale Y et s'étendant à proximité du bas du pare-brise en position de fermeture du capot avant 10. Le bord transversal avant de la doublure intérieure 14 est le bord orienté selon la direction latérale Y et s'étendant à l'opposé du capot avant 10 par rapport au bord transversal arrière selon la direction longitudinale X.

De plus, un intérêt supplémentaire de réaliser la doublure intérieure 14 dans un matériau injecté dans un moule est de permettre une intégration d'un maximum de fonctions à la doublure intérieure 14, permettant encore d'alléger le capot avant et le véhicule automobile dans son ensemble. Par conséquent, il est possible de faire en sorte que la doublure intérieure 14 délimite tout ou partie des éléments suivants :
- des éléments de renfort obtenus par augmentation locale de l'épaisseur de la doublure intérieure 14, pour renforcer la doublure intérieure 14 au niveau d'une gâche, d'articulations et de butées du capot avant 10,
- des éléments d'articulation du capot avant 10 sur l'élément de structure,
- tout ou partie de la boîte à eau et de l'élément de fermeture de la boite à eau,
- tout ou partie d'une boîte à air et d'un élément de fermeture de la boite à air,
- un réservoir additionnel (non représenté) pour contenir un liquide, notamment de l'urée, utilisable dans la stratégie de dépollution du véhicule automobile,
- un écran de passage de roue, notamment disposé le long de chaque bord longitudinal du capot avant 10 ; autrement dit, dans ce cas la doublure intérieure 14 délimite un écran de passage de roue droit 22d et un écran de passage de roue gauche 22g.

Selon un mode de réalisation, la face de structure 17 comprend tout ou partie des parties suivantes :
- deux parties longitudinales orientées sensiblement selon la direction X, agencées de manière continue sur la longueur des deux renforts de choc avant 19d, 19g sensiblement longitudinaux appartenant à l'élément de structure, configurées de sorte que deux portions longitudinales de la face d'appui 16 agencées de manière continue sur les deux bords longitudinaux de la doublure intérieure 14 viennent chacune en appui contre la partie longitudinale délimitée par un renfort de choc 19d, 19g avant correspondant, lorsque le capot avant 10 occupe sa position de fermeture,
- une partie transversale avant orientée sensiblement selon la direction Y, agencée de manière continue sur la longueur de l'ossature avant 20 sensiblement transversale appartenant à l'élément de structure, configurée de sorte qu'une portion transversale avant de la face d'appui 16 agencée de manière continue sur un bord latéral avant de la doublure intérieure 14 vienne en appui contre la partie transversale avant délimitée par l'ossature avant 20, lorsque le capot avant 10 occupe sa position de fermeture,
- une partie transversale arrière orientée sensiblement selon la direction Y, agencée de manière continue sur la longueur de la boite à eau sensiblement transversale appartenant à l'élément de structure, configurée de sorte qu'une portion transversale arrière de la face d'appui 16 agencée de manière continue sur un bord latéral arrière de la doublure intérieure 14 vienne en appui contre la partie transversale arrière délimitée par la boite à eau, lorsque le capot avant 10 occupe sa position de fermeture.

La face de structure 17 peut aussi comprendre deux bras de liaison, chacun raccordant l'ossature avant 20 à un renfort de choc avant 19d, 19g correspondant. La face de structure 17 comprend donc dans ce cas un bras de liaison droit raccordant l'ossature avant 20 au renfort de choc avant droit 19d et un bras de liaison gauche raccordant l'ossature avant 20 au renfort de choc avant droit 19g. Seul le bras de liaison gauche est représenté sur les figures, repéré 21g.

## Revendications

1. Capot avant (10) de véhicule automobile destiné à occuper une position de fermeture dans laquelle il obture un compartiment moteur (11) du véhicule, chaque bord longitudinal du capot avant étant muni d'un rebord (12d, 12g) s'étendant vers le bas lorsque le capot avant (10) est en position de fermeture, le capot avant (10) comprenant une peau extérieure (13) et une doublure intérieure (14) fixée à la peau extérieure (13), **caractérisé en ce que** la doublure intérieure (14) est obtenue par injection de matière dans un moule et conformée de sorte que la périphérie de la doublure intérieure (14) délimite une face d'appui (16) de forme annulaire destinée à venir en appui, lorsque le capot avant (10) occupe sa position de fermeture, contre une face de structure (17) du véhicule automobile en forme de couronne (15) formée dans un élément de structure du véhicule distinct du capot avant (10) et délimitant une ouverture d'accès (18) au compartiment moteur (11) lorsque le capot avant (10) occupe une position d'ouverture.

2. Capot avant (10) selon la revendication 1, **caractérisé en ce que** la face d'appui (16) annulaire présente un contour continu fermé.

3. Capot avant (10) selon l'une des revendications 1 ou 2, **caractérisé en ce que** le matériau dans lequel la doublure intérieure (14) est formée est différent du matériau dans lequel la peau extérieure (13) est formée.

4. Capot avant (10) selon la revendication 3, **caractérisé en ce que** le matériau de la peau extérieure (13) est un thermoplastique, notamment du polypropylène, et/ou **en ce que** le matériau injecté de la doublure intérieure (14) est un métal, notamment du magnésium ou de l'aluminium.

5. Capot avant (10) selon l'une quelconque des revendications 1 à 4, **caractérisé en ce que** la face d'appui (16) comprend deux portions longitudinales agencées de manière continue sur les deux bords longitudinaux de la doublure intérieure (14) et destinées à venir chacune en appui contre un renfort de choc avant (19d, 19g) correspondant lorsque le capot avant (10) occupe sa position de fermeture, les deux renforts de choc avant (19d, 19g) appartenant audit élément de structure.

6. Capot avant (10) selon l'une quelconque des revendications 1 à 5, **caractérisé en ce que** la face d'appui (16) comprend une portion transversale avant agencée de manière continue sur un bord latéral avant de la doublure intérieure (14) et destinée à venir en appui contre une ossature avant (20) du véhicule lorsque le capot avant (10) occupe sa position de fermeture, ladite ossature avant (20) appartenant audit élément de structure.

7. Capot avant (10) selon l'une quelconque des revendications 1 à 6, **caractérisé en ce que** la face d'appui (16) comprend une portion transversale arrière agencée de manière continue sur un bord latéral arrière de la doublure intérieure (14) et destinée à venir en appui contre une boite à eau du véhicule lorsque le capot avant (10) occupe sa position de fermeture, ladite boite à eau appartenant audit élément de structure.

8. Capot avant (10) selon l'une quelconque des revendications 1 à 7, **caractérisé en ce que** la doublure intérieure (14) délimite tout ou partie des éléments suivants :
- des éléments de renfort obtenus par augmentation locale de l'épaisseur de la doublure intérieure (14), pour renforcer la doublure intérieure (14) au niveau d'une gâche, d'articulations et de butées du capot avant (10),
- des éléments d'articulation du capot avant (10) sur l'élément de structure,
- tout ou partie d'une boîte à eau et d'un élément de fermeture de la boite à eau,
- tout ou partie d'une boîte à air et d'un élément de fermeture de la boite à air,
- un réservoir additionnel pour contenir un liquide, notamment de l'urée,
- un écran de passage de roue (22d, 22g).

9. Agencement pour véhicule automobile, comprenant un capot avant (10) selon l'une quelconque des revendications précédentes pouvant occuper une position de fermeture dans laquelle il obture un compartiment moteur (11) du véhicule automobile et un élément de structure du véhicule automobile distinct du capot avant (10), ayant une face de structure (17) en forme de couronne (15) délimitant une ouverture d'accès (18) au compartiment moteur (11) lorsque le capot avant (10) occupe une position d'ouverture, l'agencement étant configuré de sorte que la face d'appui (16) de forme annulaire délimitée par la périphérie de la doublure intérieure (14) est en appui contre ladite face de structure (17) lorsque le capot avant (10) occupe sa position de fermeture.

10. Agencement pour véhicule automobile selon la revendication 9, **caractérisé en ce que** la face de structure (17) en forme de couronne (15) présente un contour continu fermé.

11. Agencement pour véhicule automobile selon l'une des revendications 9 ou 10, **caractérisé en ce que** ladite face de structure (17) comprend tout ou partie des parties suivantes :
- deux parties longitudinales agencées de manière continue sur la longueur de deux renforts de choc avant (19d, 19g) sensiblement longitudinaux appartenant audit élément de structure, configurées de sorte que deux portions longitudinales de la face d'appui (16) agencées de manière continue sur les deux bords longitudinaux de la doublure intérieure (14) viennent chacune en appui contre la partie longitudinale délimitée par un renfort de choc avant (19d, 19g) correspondant, lorsque le capot avant (10) occupe sa position de fermeture,
- une partie transversale avant agencée de manière continue sur la longueur d'une ossature avant (20) sensiblement transversale appartenant audit élément de structure, configurée de sorte qu'une portion transversale avant de la face d'appui (16) agencée de manière continue sur un bord latéral avant de la doublure intérieure (14) vienne en appui contre la partie transversale avant délimitée par l'ossature avant (20), lorsque le capot (10) avant occupe sa position de fermeture,
- une partie transversale arrière agencée de manière continue sur la longueur d'une boite à eau sensiblement transversale appartenant audit élément de structure, configurée de sorte qu'une portion transversale arrière de la face d'appui agencée de manière continue sur un bord latéral arrière de la doublure intérieure (14) vienne en appui contre la partie transversale arrière délimitée par la boite à eau, lorsque le capot avant (10) occupe sa position de fermeture,
- deux bras de liaison, chacun raccordant l'ossature avant (20) à un renfort de choc avant (19d, 19g) correspondant.

12. Véhicule automobile comprenant un agencement pour véhicule automobile selon l'une quelconque des revendications 9 à 11.

## Patentansprüche

1. Vordere Haube (10) eines Kraftfahrzeugs, die dazu bestimmt ist, eine geschlossene Position einzunehmen, in der sie einen Motorraum (11) des Fahrzeugs verschließt, wobei jede Längskante der vorderen Haube mit einem Rand (12d, 12g) ausgerüstet ist, der sich nach unten erstreckt, wenn die vordere Haube (10) in der geschlossenen Position ist, wobei die vordere Haube (10) eine Außenhaut (13) und eine an der Außenhaut (13) befestigte innere Verkleidung (14) umfasst, **dadurch gekennzeichnet, dass** die innere Verkleidung (14) durch Einspritzen von Material in eine Form geschaffen wird und so angepasst ist, dass der Umfang der inneren Verkleidung (14) eine Anlagefläche (16) in Kranzform begrenzt, die dazu bestimmt ist, gegen eine Strukturfläche (17) des Kraftfahrzeugs in Ringform (15), die aus einem Strukturelement des Fahrzeugs gebildet ist, das separat von der vorderen Haube (10) ist und eine Zugriffsöffnung (18) zum Motorraum (11) begrenzt, wenn die vordere Haube (10) eine geöffnete Position einnimmt, anzuliegen, wenn die vordere Haube (10) ihre geschlossene Position einnimmt.

2. Vordere Haube (10) nach Anspruch 1, **dadurch gekennzeichnet, dass** die kranzförmige Anlagefläche (16) eine geschlossene durchgehende Kontur aufweist.

3. Vordere Haube (10) nach einem der Ansprüche 1 oder 2, **dadurch gekennzeichnet, dass** das Material, aus dem die innere Verkleidung (14) gebildet ist, verschieden von dem Material ist, aus die Außenhaut (13) gebildet ist.

4. Vordere Haube (10) nach Anspruch 3, **dadurch gekennzeichnet, dass** das Material der Außenhaut (13) ein Thermoplast ist, insbesondere Polypropylen, und/oder dass das eingespritzte Material der inneren Verkleidung (14) ein Metall ist, insbesondere Magnesium oder Aluminium.

5. Vordere Haube (10) nach einem der Ansprüche 1 bis 4, **dadurch gekennzeichnet, dass** die Anlagefläche (16) zwei Längsabschnitte umfasst, die durchgehend auf den zwei Längskanten der inneren Verkleidung (14) eingerichtet sind und dazu bestimmt sind, jeweils gegen eine entsprechende vordere Stoßverstärkung (19d, 19g) anzuliegen, wenn die vordere Haube (10) ihre geschlossene Position einnimmt, wobei die zwei vorderen Stoßverstärkungen (19d, 19g) zu dem Strukturelement gehören.

6. Vordere Haube (10) nach einem der Ansprüche 1 bis 5, **dadurch gekennzeichnet, dass** die Anlagefläche (16) einen vorderen Querabschnitt umfasst, der durchgehend auf einer vorderen Seitenkante der inneren Verkleidung (14) eingerichtet ist und dazu bestimmt ist, gegen einen vorderen Rahmen (20) des Fahrzeugs anzuliegen, wenn die vordere Haube (10) ihre geschlossene Position einnimmt, wobei der vordere Rahmen (20) zu dem Strukturelement gehört.

7. Vordere Haube (10) nach einem der Ansprüche 1 bis 6, **dadurch gekennzeichnet, dass** die Anlagefläche (16) einen hinteren Querabschnitt umfasst, der durchgehend auf einer hinteren Seitenkante der inneren Verkleidung (14) eingerichtet ist und dazu bestimmt ist, gegen einen Wasserkasten des Fahrzeugs anzuliegen, wenn die vordere Haube (10) ihre geschlossene Position einnimmt, wobei der Wasserkasten zu dem Strukturelement gehört.

8. Vordere Haube (10) nach einem der Ansprüche 1 bis 7, **dadurch gekennzeichnet, dass** die innere Verkleidung (14) alles oder einen Teil der folgenden Elemente begrenzt:
- Verstärkungselemente, die durch lokale Erhöhung der Dicke der inneren Verkleidung (14) geschaffen werden, um die innere Verkleidung (14) an einem Schließblech, an Gelenken und an Anschlägen der vorderen Haube (10) zu verstärken,
- Gelenkelemente der vorderen Haube (10) auf dem Strukturelement,
- alles oder einen Teil eines Wasserkastens und eines Verschlusselements des Wasserkastens,
- alles oder einen Teil eines Luftfilterkastens und eines Verschlusselements des Luftfilterkastens,
- einen zusätzlichen Behälter, um eine Flüssigkeit zu enthalten, insbesondere Harnstoff,
- einen Radlauf (22d, 22g).

9. Einrichtung für ein Kraftfahrzeug, umfassend eine vordere Haube (10) nach einem der vorhergehenden Ansprüche, die eine geschlossene Position einnehmen kann, in der sie einen Motorraum (11) des Kraftfahrzeugs verschließt, und ein Strukturelement des Kraftfahrzeugs, das separat von der vorderen Haube (10) ist und eine Strukturfläche (17) in Ringform (15) aufweist, die eine Zugriffsöffnung (18) zum Motorraum (11) begrenzt, wenn die vordere Haube (10) eine geöffnete Position einnimmt, wobei die Einrichtung so ausgeführt ist, dass die durch den Umfang der inneren Verkleidung (14) begrenzte Anlagefläche (16) in Kranzform gegen die Strukturfläche (17) anliegt, wenn die vordere Haube (10) ihre geschlossene Position einnimmt.

10. Einrichtung für ein Kraftfahrzeug nach Anspruch 9, **dadurch gekennzeichnet, dass** die Strukturfläche (17) in Ringform (15) eine geschlossene durchgehende Kontur aufweist.

11. Einrichtung für ein Kraftfahrzeug nach einem der Ansprüche 9 oder 10, **dadurch gekennzeichnet, dass** die Strukturfläche (17) alles oder einen Teil der folgenden Teile umfasst:
- zwei Längsteile, die durchgehend auf der Länge von zwei im Wesentlichen längsgerichteten vorderen Stoßverstärkungen (19d, 19g), die zum Strukturelement gehören, eingerichtet sind und die so ausgeführt sind, dass zwei Längsabschnitte der Anlagefläche (16), die durchgehend auf den zwei Längskanten der inneren Verkleidung (14) eingerichtet sind, jeweils gegen den Längsteil anliegen, der durch eine entsprechende vordere Stoßverstärkung (19d, 19g) begrenzt ist, wenn die vordere Haube (10) ihre geschlossene Position einnimmt,
- einen vorderen Querteil, der durchgehend auf der Länge eines im Wesentlichen quergerichteten vorderen Rahmens (20), der zum Strukturelement gehört, eingerichtet ist und der so ausgeführt ist, dass ein vorderer Querteil der Anlagefläche (16), der durchgehend auf einer vorderen Seitenkante der inneren Verkleidung (14) eingerichtet ist, gegen den vorderen Querteil, der durch den vorderen Rahmen (20) begrenzt ist, anliegt, wenn die vordere Haube (10) ihre geschlossene Position einnimmt,
- einen hinteren Querteil, der durchgehend auf der Länge eines im Wesentlichen quergerichteten Wasserkastens, der zum Strukturelement gehört, eingerichtet ist und der so ausgeführt ist, dass ein hinterer Querteil der Anlagefläche, der durchgehend auf einer hinteren Seitenkante der inneren Verkleidung (14) eingerichtet ist, gegen den hinteren Querteil, der durch den Wasserkasten begrenzt ist, anliegt, wenn die vordere Haube (10) ihre geschlossene Position einnimmt,
- zwei Verbindungsarme, die jeweils den vorderen Rahmen (20) mit einer entsprechenden vorderen Stoßverstärkung (19d, 19g) verbinden.

12. Kraftfahrzeug, umfassend eine Einrichtung für ein Kraftfahrzeug nach einem der Ansprüche 9 bis 11.

## Claims

1. Hood (10) of an automotive vehicle intended to occupy a closed position in which it closes off an engine compartment (11) of the vehicle, each longitudinal edge of the hood being provided with a rim (12d, 12g) extending downward when the hood (10) is in the closed position, the hood (10) comprising an external skin (13) and an internal lining (14) fixed to the external skin (13), **characterized in that** the internal lining (14) is obtained by injecting a material into a mould and is shaped in such a way that the periphery of the internal lining (14) defines a bearing face (16) having an annular shape intended to bear, when the hood (10) occupies its closed position, against a structural face (17) of the automotive vehicle in the shape of a ring (15) formed in a structural element of the vehicle separate from the hood (10) and defining an access opening (18) to the engine compartment (11) when the hood (10) occupies an open position.

2. Hood (10) according to Claim 1, **characterized in that** the annular bearing face (16) has a continuously closed outline.

3. Hood (10) according to Claim 1 or 2, **characterized in that** the material from which the internal lining (14) is formed is different from the material from which the external skin (13) is formed.

4. Hood (10) according to Claim 3, **characterized in that** the material of the external skin (13) is a thermoplastic, in particular polypropylene, and/or **in that** the injected material of the internal lining (14) is a metal, in particular magnesium or aluminium.

5. Hood (10) according to any one of Claims 1 to 4, **characterized in that** the bearing face (16) comprises two longitudinal portions arranged in a continuous manner on the two longitudinal edges of the internal lining (14) and each intended to bear against a corresponding front impact reinforcement (19d, 19g) when the hood (10) occupies its closed position, the two front impact reinforcements (19d, 19g) belonging to said structural element.

6. Hood (10) according to any one of Claims 1 to 5, **characterized in that** the bearing face (16) comprises a front transverse portion arranged in a continuous manner on a front lateral edge of the internal lining (14) and intended to bear against a front frame (20) of the vehicle when the hood (10) occupies its closed position, said front frame (20) belonging to said structural element.

7. Hood (10) according to any one of Claims 1 to 6, **characterized in that** the bearing face (16) comprises a rear transverse portion arranged in a continuous manner on a rear lateral edge of the internal lining (14) and intended to bear against a water box of the vehicle when the hood (10) occupies its closed position, said water box belonging to said structural element.

8. Hood (10) according to any one of Claims 1 to 7, **characterized in that** the internal lining (14) defines a part or all of the following elements:
- reinforcing elements obtained by locally increasing the thickness of the internal lining (14), in order to reinforce the internal lining (14) at a striker, hinges and abutments of the hood (10),
- hinge elements of the hood (10) on the structural element,
- part or all of a water box and an element for closing the water box,
- part or all of an air box and an element for closing the air box,
- an additional tank for containing a liquid, in particular urea, and
- a wheel arch liner (22d, 22g).

9. Arrangement for an automotive vehicle, comprising a hood (10) according to any of the preceding claims that may occupy a closed position in which it closes off an engine compartment (11) of the automotive vehicle and a structural element of the automotive vehicle separate from the hood (10), having a structural face (17) in the shape of a ring (15) defining an access opening (18) to the engine compartment (11) when the hood (10) occupies an open position, the arrangement being configured in such a way that the bearing face (16) having an annular shape defined by the periphery of the internal lining (14) bears against said structural face (17) when the hood (10) occupies its closed position.

10. Arrangement for an automotive vehicle according to Claim 9, **characterized in that** the structural face (17) in the shape of a ring (15) has a continuously closed outline.

11. Arrangement for an automotive vehicle according to Claim 9 or 10, **characterized in that** said structural face (17) comprises a part or all of the following parts:
- two longitudinal parts arranged in a continuous manner over the length of two substantially longitudinal front impact reinforcements (19d, 19g) belonging to said structural element, configured in such a way that two longitudinal portions of the bearing face (16) arranged in a continuous manner on the two longitudinal edges of the internal lining (14) each bear against the longitudinal part defined by a corresponding front impact reinforcement (19d, 19g), when the hood (10) occupies its closed position,
- a front transverse part arranged in a continuous manner over the length of a substantially transverse front frame (20) belonging to said structural element, configured in such a way that a front transverse portion of the bearing face (16) arranged in a continuous manner on a front lateral edge of the internal lining (14) bears against the front transverse part defined by the front frame (20), when the hood (10) occupies its closed position,
- a rear transverse part arranged in a continuous manner over the length of a substantially transverse water box belonging to said structural element, configured in such a way that a rear transverse portion of the bearing face arranged in a continuous manner on a rear lateral edge of the internal lining (14) bears against the rear transverse part defined by the water box, when the hood (10) occupies its closed position, and
- two linking arms, each connecting the front frame (20) to a corresponding front impact reinforcement (19d, 19g) .

12. Automotive vehicle comprising an arrangement for an automotive vehicle according to any one of Claims 9 to 11.
